Europäisches Patentamt

European Patent Office

Office européen des brevets

(11) Numéro de publication: **0 430 751 A1**

# DEMANDE DE BREVET EUROPEEN

(21) Numéro de dépôt: 90403241.4

(22) Date de dépôt: 16.11.90

(51) Int. Cl.⁵: **F26B 7/00**, C05D 3/02

(30) Priorité: 17.11.89 FR 8915138

(43) Date de publication de la demande:
05.06.91 Bulletin 91/23

(84) Etats contractants désignés:
BE CH DE ES GB LI LU Bulletin

(71) Demandeur: **Bedos, François**
**Résidence Avenue Saint-Ferréol**
**F-12490 Saint-Rome-De-Tarn(FR)**

Demandeur: **Sévigné, Marc**
**1837 route des Aumières**
**F-12100 Millau(FR)**

(72) Inventeur: **Bedos, François**
**Résidence Avenue Saint-Ferréol**
**F-12490 Saint-Rome-De-Tarn(FR)**
Inventeur: **Sévigné, Marc**
**1837 route des Aumières**
**F-12100 Millau(FR)**

(74) Mandataire: **Caunet, Jean et al**
**Cabinet BEAU DE LOMENIE 55, rue**
**d'Amsterdam**
**F-75008 Paris(FR)**

(54) **Procédé et installation pour la fabrication d'un amendement calcaire mixte pour sols agricoles des massifs granitiques.**

(57) L'installation comporte au moins deux dispositifs de stockage, de dosage et de distribution (1, 5), respectivement l'un du composant calcaire ou dolomitique et l'autre de la chaux vive, qui sont branchés sur l'entrée (21) d'un broyeur mélangeur (16) dont la sortie (22) alimente un dispositif de foisonnement et de séchage.

L'invention réside en ce que le dispositif de foisonnement (27), dans lequel la chaux vive en s'hydratant assèche le composant calcaire ou dolomitique, est logé dans une enceinte (30) confinant l'atmosphère pour que celle-ci s'échauffe lors de l'hydratation exothermique de la chaux vive et restitue la chaleur aussi emmagasinée audit composant pour évaporer l'eau résiduaire qu'il contient, cette enceinte communiquant (entre 30 et 35) avec l'air libre pour évacuer l'air saturé en vapeur d'eau et le remplacer par de l'air non saturé, et en ce qu'un troisième dispositif de stockage, de dosage et de distribution (8) des boues de lavage et des poussières humides issues du filtrage est branché sur l'entrée (21) du broyeur mélangeur (16).

EP 0 430 751 A1

# FIG.1

# PROCÉDÉ ET INSTALLATION POUR LA FABRICATION D'UN AMENDEMENT CALCAIRE MIXTE POUR SOLS AGRICOLES DES MASSIFS GRANITIQUES.

La présente invention concerne un procédé et une installation pour la fabrication d'un amendement calcaire mixte pour sols agricoles des massifs granitiques, composé d'un mélange de calcaire ou de dolomies et de chaux.

L'amendement cru, composé de calcaire naturel broyé sans autres apports, est un produit qui n'attire pas l'exploitant agricole car il est long à agir et ne porte pas de résultats visibles dès la première année. Si on utilise un calcaire pur, plus il est broyé finement et plus sa solubilité et plus par conséquent son efficacité augmentent.

Dans le cas des dolomies, roches composées de calcaire et de magnésie, la solubilité se stabilise aux environs de 40 à partir d'une certaine finesse ; par contre, la présence de magnésium due à la magnésie renforce la synthèse chlorophylienne des cultures et améliore la verdeur des produits présentés. Un amendement de dolomies est donc préféré à un amendement de calcaire pur.

Il est possible d'utiliser de la craie, des gisements de coquilles, des marnes calcaires qui sont toutefois moins complets que des dolomies.

Le prix de marché d'un amendement cru est faible et ne génère pas une bonne valeur ajoutée de sorte que ce produit est en fait plutôt considéré comme sous-produit des carrières calcaires qui basent leur activité sur la production de graviers et autres granulats ou pierres, d'un meilleur rapport.

Considéré comme sous-produit et devant être livré sous forme pulvérulente, il était imaginable de penser à utiliser les boues de lavage et les poussières récupérées sur les filtres des installations de carrières, tels quels ; mais le produit doit être livré à l'agriculteur dans une qualité rigoureuse, qui n'autorise ni la présence de particules mal broyées qui pourraient détériorer son matériel, ni la présence trop flagrante d'humidité qui fait penser que l'on n'achète que de l'eau. Ces impératifs limitent apparemment les possibilités de valeur ajoutée donc l'intérêt industriel d'une activité basée spécifiquement sur la production d'amendements crus ordinaires.

L'amendement cuit constitué principalement de chaux vive est très efficace la première année puis perd très vite son pouvoir, sans l'effet cumulatif observable avec les amendements crus en cas de traitements renouvelés. De plus, il est dangereux et irrite les muqueuses lors de l'épandage ce qui dissuade l'exploitant agricole de l'utiliser, d'autant que le produit est nettement plus cher que l'amendement cru.

Un autre inconvénient est que la flore microbienne du sol est gravement attaquée lors du traitement.

Enfin, le calcium à l'état d'oxyde est très soluble dans l'eau donc rapidement lessivé en hiver.

L'amendement mixte composé comme son nom l'indique d'un mélange de calcaire ou de dolomies et de chaux donne des résultats visibles dès la première année par la chaux qu'il contient et conserve par la suite une bonne longévité d'action grâce au calcaire ou aux dolomies crues de sa composition.

Tous les amendements mixtes existants contiennent de la chaux vive dans de telles proportions qu'ils nuisent à la flore microbienne du sol.

La demande de brevet français n° 2 620 206 décrit un procédé de séchage d'amendements calcaires ou magnésiens par réaction chimique à caractère exothermique".

Ce procédé consiste à éliminer l'eau de l'amendement en utilisant celle-ci pour hydrater la chaux vive ajoutée et en l'évaporant en partie grâce à la chaleur générée lors de cette réaction chimique. L'utilisation de la chaleur n'est absolument pas maîtrisée, de sorte que le dégagement de vapeur d'eau n'est pas optimisé et que le bilan économique du traitement n'est pas suffisamment satisfaisant.

Par ailleurs, pour l'extraction des roches calcaires ou dolomitiques et leur conditionnement adapté à leur destination fonctionnelle, les matériels exploités produisent des boues de lavage et des poussières humides de filtrage. Ces produits ne sont pas utilisés et constituent des déchets dont l'élimination est coûteuse. Pourtant, lesdits produits, en raison notamment de leur finesse, pourraient être destinés à l'amendement des sols s'ils n'étaient trop humides et que l'élimination de l'eau n'était si coûteuse par séchage thermique.

La présente invention a pour but de remédier à ces inconvénients en optimisant le procédé de séchage selon le brevet français n° 2 620 206 et en l'automatisant, en accompagnant le traitement des roches calcaires ou dolomitiques d'une utilisation des boues de lavage et des poussières humides de filtrage, en s'assurant de l'extinction totale de la chaux vive ajoutée et en produisant finalement un amendement de qualité exceptionnelle.

Dans ce but et conformément à l'invention, le procédé consiste en ce que :
- l'atmosphère dans laquelle le mélange de calcaire ou de dolomies et de chaux vive "foisonne" est confinée pour piéger la chaleur dégagée et le mélange est brassé pour renouveler le contact d'échange thermique entre les particules dudit mélange et cette atmosphère chaude confinée,

- la quantité de chaux vive est inférieure à ce qui est nécessaire pour sécher le composant uniquement par la réaction chimique et cependant supérieure à ce qui est nécessaire pour sécher le composant par la réaction chimique et le dégagement de chaleur,
- et l'excédent de chaux vive est éteint par apport de boues de lavage et de poussières humides issues du filtrage dans les installations des carrières de calcaire ou de dolomies.

Plus particulièrement, l'atmosphère confinée chaude et saturée en vapeur d'eau est évacuée lentement et remplacée par de l'air ambiant.

Les boues de lavage et les poussières humides issues du filtrage sont incorporées au mélange pendant le broyage de ses composants.

L'installation pour la mise en oeuvre du procédé comporte au moins deux dispositifs de stockage, de dosage et de distribution, respectivement l'un du composant calcaire ou dolomitique et l'autre de la chaux vive, qui sont branchés sur l'entrée d'un broyeur mélangeur dont la sortie alimente un dispositif de foisonnement et de séchage. Cette installation est perfectionnée selon l'invention, invention qui réside alors :
- en ce que le dispositif de foisonnement dans lequel la chaux vive en s'hydratant assèche le composant calcaire ou dolomitique, est logé dans une enceinte confinant l'atmosphère, pour que celle-ci s'échauffe lors de l'hydratation exothermique de la chaux vive et restitue la chaleur ainsi emmagasinée audit composant pour évaporer l'eau résiduaire qu'il contient, cette enceinte communiquant avec l'air libre pour évacuer l'air saturé en vapeur d'eau et le remplacer par de l'air non saturé
- et en ce qu'un troisième dispositif de stockage, de dosage et de distribution des boues de lavage et des poussières humides issues du filtrage est branché sur l'entrée du broyeur mélangeur.

Suivant une forme de réalisation particulièrement avantageuse, le dispositif de foisonnement est une vis transporteuse dont l'axe incliné monte vers l'aval, cette vis étant tangente à un fond incurvé de plus grand diamètre d'une auge fixe dont des parois verticales surmontant le fond sont coiffées par un couvercle, au moins une fente de tranfert de l'air étant ménagée entre le couvercle et au moins l'une desdites parois.

La sortie du dispositif de foisonnement débouche dans une tour à élévateur intérieur distribuant en partie haute le mélange sec à au moins un dispositif de stockage, la tour coopérant en partie basse avec un ventilateur délivrant de l'air extérieur sec et en tête avec un extracteur de l'air humide filtré, de façon à générer dans ladite tour un courant ascendant d'air se chargeant de l'humidité résiduelle du mélange.

La base de la tour est un bac dans lequel se déverse le mélange en provenance du dispositif de foisonnement et plongent des godets de l'élévateur, le lit de mélange dans le bac étant fluidisé par des buses branchées sur une conduite d'air.

Des appareils de mesure du débit des trois dispositifs de distribution du composant calcaire ou dolomitique, de la chaux et des boues et des poussières et un appareil de mesure du taux d'humidité du mélange ou de ses composants à sécher délivrent les signaux mesurés à un automate qui commande les moyens de dosage de ces trois dispositifs.

Des détecteurs de colmatage sont disposés aux endroits où les matériaux chutent et qui sont situés en aval des zones de colmatage, chaque détecteur comprenant un tourniquet à axe sensiblement horizontal dont une partie des pales s'étend en travers de la chute et dont l'interruption de rotation déclenche l'arrêt de l'installation et éventuellement une alarme.

La mise en oeuvre du procédé de l'invention notamment dans l'installation précitée permet d'obtenir un amendement de qualité exceptionnelle.

En effet, il est efficace dès la première année en raison de la présence de chaux éteinte dans une proportion pouvant atteindre 30%.

Il préserve la microflore du sol du fait qu'il ne subsiste plus de chaux vive.

Son action est durable plusieurs années grâce au calcaire ou aux dolomies.

L'épandage de ce produit pulvérulent peut être effectué par les moyens agricoles traditionnels de faible coût, puisqu'il est finement broyé et exempt de cailloux.

Par ailleurs, il accroche facilement à son support sol ou végétal, n'ayant pas tendance comme les produits concurrents à s'envoler facilement au vent ; les pertes par entraînement sont donc négligeables.

La durée de stockage se trouve considérablement accrue sans altération de la qualité du produit, toute l'humidité ayant été éliminée et aucune trace de chaux vive ne subsistant dès lors, le stockage, la manutention et le transport sous sacs étanches ne posent plus aucun problème de gonflement et d'éclatement du conditionnement, d'agression chimique du personnel qui opère le traitement sur le terrain.

Outre la qualité exceptionnelle du produit exposée ci-dessus, il est important de noter que la compétitivité obtenue est telle que les exploitants agricoles le préfère aux amendements connus de même destination, que son prix de vente peut être stabilisé à un faible niveau alors que les distances de livraison peuvent être accrues, que malgré cela la valeur ajoutée est intéressante et justifie une exploitation rentable.

Il peut être noté également que le procédé exploite des sous-produits de carrière qui étaient considérés jusqu'alors comme des déchets dont l'élimination était coûteuse.

Divers autres caractéristiques et avantages de l'invention ressortent d'ailleurs de la description détaillée qui suit.

Une forme de réalisation de l'objet de l'invention est représentée, à titre d'exemple non limitatif, sur le dessin annexé. Sur ce dessin :

- la figure 1 est une élévation-coupe schématique d'une installation, conforme à l'invention ;

- la figure 2 est une élévation-coupe montrant un broyeur mélangeur susceptible d'être implanté dans l'installation ;

- la figure 3 est une élévation avec arrachement illustrant le dispositif de foisonnement mis en oeuvre dans ladite installation ;

- la figure 4 est une coupe transversale prise suivant la ligne IV-IV de la figure 3 ;

- la figure 5 est un croquis schématisant l'un des détecteurs de colmatage disposés en différents points importants de l'installation.

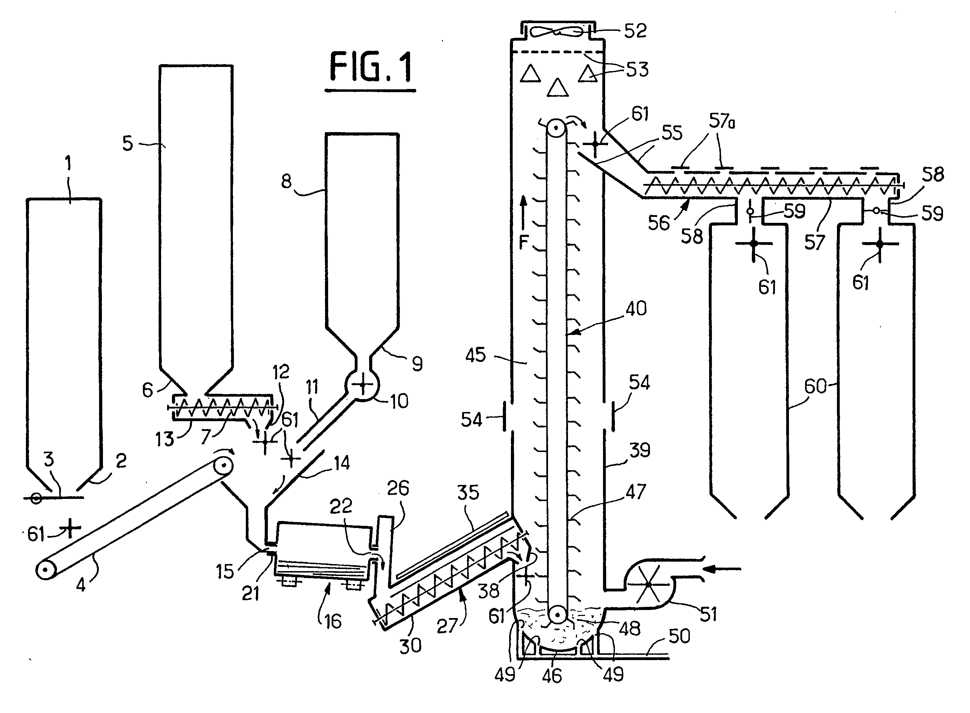

Ainsi que cela ressort clairement de la figure 1, l'installation comporte :

- un réservoir 1 de stockage des granulats de base calcaire ou dolomies, réservoir dont la trémie inférieure 2 coopère avec un distributeur-doseur 3, tel qu'un débitmètre à plaque, délivrant les quantités distribuées à un transporteur 4 en pente ascendante qui peut être du type à bande ;

- un réservoir 5 de stockage de la chaux vive, réservoir dont la trémie inférieure 6 coopère avec une vis de dosage 7 ;

- un réservoir 8 de stockage des boues de lavage prélevées dans des bassins de décantation et/ou des poussières provenant des filtres, réservoir dont la trémie inférieure 9 coopère avec un distributeur-doseur 10, tel qu'une pompe à palettes, délivrant ces fines humides de récupération à une conduite 11.

L'extrémité haute du transporteur de granulats 4, la bouche de sortie 12 de la gaine 13 de la vis 7 de dosage de la chaux vive et la conduite 11 d'amenée des produits pulvérulents humides débouchent au-dessus d'un entonnoir 14 dont la tubulure basse de sortie 15 alimente un broyeur mélangeur 16.

Le broyeur mélangeur 16 peut être de n'importe quel type du moment qu'il délivre après traitement un mélange pulvérulent homogène de calcaire (et/ou de dolomies) broyé, de chaux vive et de fines de récupération.

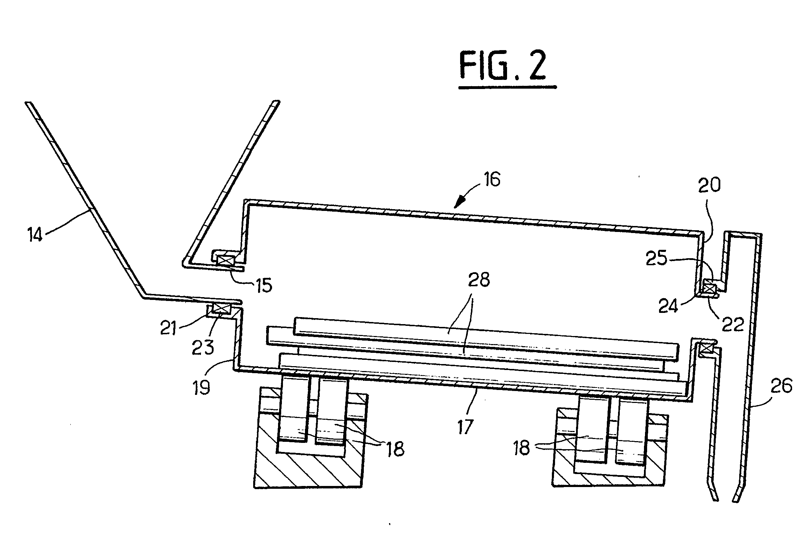

Dans l'exemple représenté sur les figures 1 et 2, le broyeur mélangeur 16 est du type à barres libres. Il comporte un tambour 17 à axe sensiblement horizontal qui en réalité s'étend en légère pente descendante. Le tambour 17 repose sur deux chemins de roulement 18 dont l'un au moins est motorisé. Ses parois extrêmes 19 et 20 présentent des manchons tournants coaxiaux 21 et 22. Dans le manchon amont 21 muni d'un joint labyrinthe d'étanchéité 23 est montée la tubulure de sortie 15 de l'entonnoir d'alimentation en matériaux 14. Autour du manchon aval 22 muni d'un joint labyrinthe d'étanchéité 24 est montée une tubulure d'entrée 25 d'un puits 26 d'alimentation en mélange pulvérulent homogène d'un dispositif de foisonnement 27.

Le broyeur mélangeur 16 contient des barres lourdes 28 s'étendant longitudinalement dans le tambour tournant 17. Celui-ci entraîne les matériaux qu'il contient et les barres, lesquelles roulent, s'élèvent et retombent en écrasant lesdits matériaux. En raison de la pente du tambour, le mélange chemine vers la paroi aval et ses particules grosses se localisent vers le bas, tandis que ses particules fines tendent à surnager. Dès lors, le trop plein des particules fines des divers matériaux mélangés de façon homogène se déversent d'une façon presque continue par le manchon aval 22 du tambour et la tubulure 25 dans le puits 26 et alimentent le dispositif de foisonnement 27.

Dans l'exemple représenté sur les figures 1, 3 et 4, le dispositif de foisonnement 27 comporte une vis transporteuse élévatrice 29 dont l'axe est fortement incliné de l'amont vers l'aval en s'élevant. La vis est montée tournante dans une auge fixe 30 et est accouplée à un groupe motoréducteur 31. L'auge 30 présente un fond cylindrique 32 prolongé vers le haut par des parois verticales 33.1 et 33.2 coiffées, dans la partie amont, par un couvercle fixe plat 34 et dans la partie intermédiaire et la partie aval, par un couvercle ouvrant 35 en forme de toit. Le fond 32 dont le rayon est plus grand que celui de la vis 29, est tangent à celle-ci et les parois 33.1, 33.2 s'élèvent largement au-dessus de ladite vis. Ainsi, l'auge 30 et les couvercles 34, 35 délimitent une cavité-tunnel 36 dont la capacité est supérieure au volume de transport de la vis 29.

L'extrémité amont du couvercle fixe 34 est munie d'une bouche d'alimentation 37 sur laquelle le puits 26 du broyeur mélangeur 27 est branché. L'extrémité aval du fond 32 de l'auge 32 est munie d'une bouche de distribution 38 déversant le mélange asséché dans une tour 39 à élévateur intérieur 40.

La capacité de la cavité 36 est telle que l'atmosphère d'évaporation du mélange transporté par la vis 29 se trouve confinée et piège la chaleur dégagée par la réaction exothermique de la chaux en l'empêchant de se dissiper dans l'atmosphère ambiante. Le foisonnement du mélange dû à l'hydratation de la chaux vive qui génère la chaleur, se produit lors du transport du mélange par la vis. En même temps que la chaleur dégagée est piégée dans la cavité 26 pour évaporer l'eau des matériaux calcaires et/ou dolomitiques, il est nécessaire de remuer le mélange transporté par la vis, d'une part, pour "casser" le foisonnement grâce auquel la chaux vive en s'hydratant extrait l'eau desdits matériaux et d'autre part, pour remuer le mélange afin d'intensifier et d'homogénéiser l'évaporation. Cet effet de "brassage" est obtenu, d'une part, grâce à la pente de la vis qui engendre des retombées de mélange lorsque celui-ci parvient en haut des spires et, d'autre part, grâce à l'espace ménagé entre la vis 29 et le fond 32 de l'auge 30, espace dans lequel le mélange qui retombe s'accumule et est prélevé par lesdits spires.

Le couvercle ouvrant 35 en forme de toit est muni le long de l'une de ses rives, de pattes 41 disposées dans des chapes 42 de la paroi 33.2 de l'auge 30 et articulées autour d'axes 43. Lorsqu'il est fermé, il repose par sa rive opposée sur l'autre paroi 33.1, position dans laquelle la cavité-tunnel 36 est close. Cependant, l'atmosphère confinée dans cette cavité tendant à se saturer, il est nécessaire de la renouveler lentement pour évacuer la vapeur d'eau en perdant le minimum de calories.

Dans l'exemple représenté, au moins un pied de support réglable 44 est interposé entre le couvercle 35 et la paroi 33.1 de l'auge. Ainsi et dès lors que les axes 43 sont situés plus bas que le couvercle, deux fentes d'épaisseurs inégales peuvent être ménagées entre le couvercle et l'auge pour opérer le renouvellement de l'atmosphère confinée dans la cavité 36, la fente de la paroi 33.1 étant plus haute que celle de la paroi 33.2.

Dans cet exemple, l'échappement d'air chaud saturé d'humidité et l'admission d'air sec s'effectuent sur toute la longueur du couvercle.

Cependant, il peut être avantageux de sélectionner les endroits où ont lieu l'échappement et l'admission. Dans ce but, le couvercle 35 peut être divisé et ses composants peuvent être ouverts de façon sélective tant quant à leur emplacement qu'à leur section de passage. Ainsi, l'admission peut être privilégiée en amont et l'échappement en aval.

Comme le montre schématiquement la figure 1, la tour 39 présente une section rectangulaire supérieure d'au moins 10% de celle de l'élévateur à godets 40 ; dans l'exemple représenté, la section est double de sorte qu'autour de l'élévateur, est formée une cheminée 45 dans laquelle l'air humide s'échappe vers le haut.

A sa partie inférieure, la tour 39 fait corps avec un bac cylindrique 46 dans lequel la bouche de distribution 38 du dispositif de foisonnement 27 déverse le mélange et les godets 47 de l'élévateur 40 plongent et prélèvent ledit mélange ainsi stocké. Avantageusement, le lit de mélange 48 est fluidisé grâce à des buses 49 convenablement réparties dans le bac 46 et branchées sur une conduite d'air 50.

La cheminée 45 provoque la circulation ascendante de l'air autour des godets 47, afin que cet air se charge de l'humidité résiduaire du mélange contenu dans lesdits godets. Afin de forcer cette circulation, un ventilateur 51 et un extracteur 52 peuvent être branchés respectivement sur la base et le sommet de la cheminée, un dispositif de filtrage 53 pouvant avantageusement être installé. Par ailleurs, des trappes de mise à l'air libre 54 peuvent être prévues à des niveaux convenablement choisis de la tour.

A la partie supérieure, cette tour 39 fait corps avec un déversoir 55 dans lequel les godets 47 du brin descendant de l'élévation 40 se déchargent du mélange sec qu'ils contiennent. Le déversoir 55 communique avec un transporteur d'alimentation 56, à vis dans l'exemple représenté. La gaine 57 de cette vis transporteuse est munie de bouches d'alimentation 58 branchées sous le contrôle d'obturateurs 59 sur des trémies 60 de stockage du mélange, lequel est alors prêt à être pesé et conditionné. La gaine 57 est avantageusement munie de trappes d'évacuation d'air 57a

Dans la forme de réalisation représentée et décrite dans ce qui précède, un capteur d'humidité, non représenté, est branché sur l'entrée 25 du puits 26 pour déterminer la teneur en eau du mélange pulvérulent sortant du broyeur mélangeur 16.

Un automate reçoit les données suivantes :
- cette teneur en eau du mélange,
- le débit massique de calcaire et/ou de dolomies mesuré au débitmètre à plaque 3 de la trémie 2
- et le débit de chaux vive préprogrammé et généré par la vis doseuse 7 de la trémie 6.

Il calcule la part de ce débit de chaux vive qui sera utilisée pour sécher le calcaire et/ou les dolomies et en déduit le débit de boues à délivrer (dont la teneur en eau est connue) pour éteindre la partie restante de chaux vive.

Il règle alors pour le produit à fabriquer dont la teneur en chaux éteinte est prédéfinie, la pompe doseuse 10 de la trémie 9 et corrélativement la vis doseuse 7 afin que justement, par correction continue sur la chaux vive et les boues, la teneur en chaux éteinte du produit fabriqué corresponde exactement à la définition d'origine.

Bien entendu, cette installation est sensible au colmatage. Il est donc nécessaire de prévoir en aval des produits sensibles, des détecteurs de colmatage provoquant l'arrêt de ladite installation et l'alarme, pour que des mesures de sécurité et de remise en marche soient prises sans attendre.

Les points de détection sont désignés par le repère 61 sur la figure 1 et situés à l'aplomb, par exemple :
- de la trémie 2 délivrant le calcaire ;
- de la bouche 12 délivrant la chaux vive ;

- de la conduite 11 délivrant les boues ;
- de la bouche 38 délivrant le mélange après foisonnement ;
- du déversoir 55 du mélange sec distribué par l'élévateur 40 ;
- des bouches 58 alimentant les trémies de stockage 60 en mélange sec.

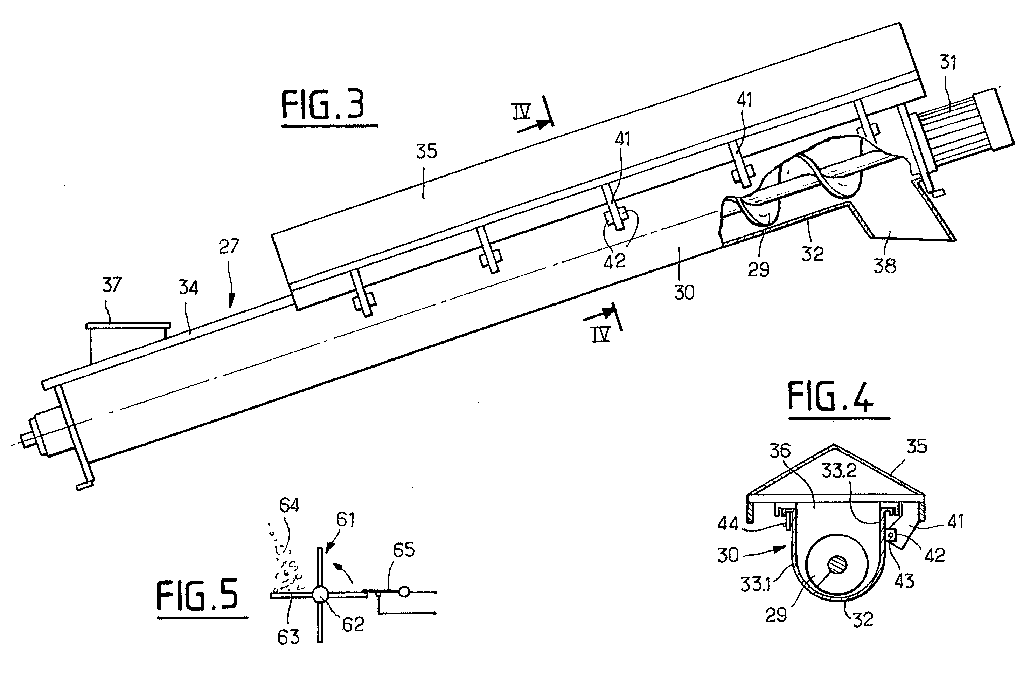

La figure 5 montre un type de détecteur de colmatage 61 qui peut être utilisé dans l'installation. Ce détecteur comprend un tourniquet à axe 62 sensiblement horizontal dont les pales 63 de la moitié gauche par exemple (fig. 5) s'étendent en travers de la chute 64 des matériaux. Ceux-ci peuvent alors provoquer la rotation du tourniquet dont les pales montantes de la moitié droite sont susceptibles d'agir sur la lame mobile d'un relais 65. Le relais est monté dans la centrale de commande de l'installation et coopère avec une constante de temps. Dans ces conditions, tant que la durée séparant deux sollicitations successives de la lame de relais est inférieure à la constante de temps, le matériel contrôlé par ce détecteur de colmatage 61 continue à fonctionner. Par contre, lorsque cette durée est supérieure, le relais ouvre le circuit de commande et arrête ledit matériel, en même temps qu'il déclenche une alarme.

Dans la forme de réalisation représentée, les boues sont incorporées au mélange dans le broyeur.

Rien ne s'oppose cependant à ce que la chaux vive en excès soit mélangée dans le broyeur uniquement au calcaire (ou aux dolomies) et que les boues ou poussières soient dosées et ajoutées à ce mélange pendant le foisonnement pour éteindre l'excédent de chaux vive.

Il est bien évident que si le pourcentage de chaux éteinte dans le produit vendu est prédéfini, il est nécessaire de compléter avec de la chaux vive l'apport de boues, pour qu'une correction adaptée soit effectuée.

**Revendications**

1. Procédé pour la fabrication d'un amendement calcaire mixte pour sols agricoles des massifs granitiques, composé d'un mélange de calcaire ou de dolomies et de chaux,
le procédé consistant à mélanger de la chaux vive avec le composant calcaire ou dolomitique et à les mélanger pour que la chaux vive en s'hydratant avec l'eau du composant tende à sécher celui-ci et à se transformer en chaux éteinte et que la chaleur dégagée lors de la réaction exothermique d'hydratation participe au séchage précité,
ce procédé étant caractérisé en ce que :
- l'atmosphère dans laquelle le mélange de calcaire ou de dolomies et de chaux vive "foisonne" est confinée pour piéger la chaleur dégagée et le mélange est brassé pour renouveler le contact d'échange thermique entre les particules dudit mélange et cette atmosphère chaude confinée,
- la quantité de chaux vive est inférieure à ce qui est nécessaire pour sécher le composant uniquement par la réaction chimique et cependant supérieure à ce qui est nécessaire pour sécher le composant par la réaction chimique et le dégagement de chaleur,
- et l'excédent de chaux vive est éteint par apport de boues de lavage et de poussières humides issues du filtrage dans les installations des carrières de calcaire ou de dolomies.

2. Procédé selon la revendication 1, caractérisé en ce que l'atmosphère confinée chaude et saturée en vapeur d'eau est évacuée lentement et remplacée par de l'air ambiant.

3. Procédé selon la revendication 1, caractérisé en ce que les boues de lavage et les poussières humides issues du filtrage sont incorporées au mélange pendant le broyage de ses composants.

4. Installation pour la mise en oeuvre du procédé selon l'une quelconque des revendications 1 à 3, comportant au moins deux dispositifs de stockage, de dosage et de distribution (1, 5), respectivement l'un du composant calcaire ou dolomitique et l'autre de la chaux vive, qui sont branchés sur l'entrée (21) d'un broyeur mélangeur (16) dont la sortie (22) alimente un dispositif de foisonnement et de séchage, caractérisée :
- en ce que le dispositif de foisonnement (27), dans lequel la chaux vive en s'hydratant assèche le composant calcaire ou dolomitique, est logé dans une enceinte (30) confinant l'atmosphère pour que celle-ci s'échauffe lors de l'hydratation exothermique de la chaux vive et restitue la chaleur aussi emmagasinée audit composant pour évaporer l'eau résiduaire qu'il contient, cette enceinte communiquant (entre 30 et 35) avec l'air libre pour évacuer l'air saturé en vapeur d'eau et le remplacer par de l'air non saturé,
- et en ce qu'un troisième dispositif de stockage, de dosage et de distribution (8) des boues de lavage et des poussières humides issues du filtrage est branché sur l'entrée (21) du broyeur mélangeur (16).

5. Installation selon la revendication 4, caractérisé en ce que le dispositif de foisonnement (27) est une vis transporteuse (29) dont l'axe incliné monte vers l'aval, cette vis étant tangente à un fond incurvé (32) de plus grand diamètre d'une auge fixe (30) dont des parois verticales (33.1, 33.2) surmontant le fond sont coiffées par un couvercle (35), au moins une fente de transfert de l'air étant ménagée entre le couvercle et au moins l'une desdites parois.

6. Installation selon la revendication 5, caractérisée en ce que le couvercle (35) est monté pivotant (en 43) sur l'une des parois (33.2) de l'auge (30) et fixé de façon réglable sur l'autre paroi (33.1) pour délimiter au moins une fente de transfert de l'air.

7. Installation selon la revendication 4, caractérisé en ce que la sortie (38) du dispositif de foisonnement (27) débouche dans une tour (39) à élévateur intérieur (40) distribuant en partie haute (55) le mélange sec à au moins un dispositif de stockage (60), la tour coopérant en partie basse avec un ventilateur (51) délivrant de l'air extérieur sec et en tête avec un extracteur de l'air humide filtré (52), de façon à générer dans ladite tour un courant ascendant d'air se chargeant de l'humidité résiduaire du mélange.

8. Installation selon la revendication 7, caractérisée en ce que la base de la tour est un bac (46) dans lequel se déverse (en 38) le mélange en provenance du dispositif de foisonnement (27) et plongent des godets (47) de l'élévateur (40), le lit (48) de mélange dans le bac (46) étant fluidisé par des buses (49) branchées sur une conduite d'air (50).

9. Installation selon la revendication 7, caractérisée en ce que la section intérieure de la tour (39) est supérieure d'au moins 10 % à la section de passage des godets (47) de l'élévateur (40).

10. Installation selon la revendication 7, caractérisé en ce qu'un déversoir supérieur (55) de la tour débouche dans la gaine (57) d'un transporteur à vis (56) muni d'au moins une bouche d'alimentation (58) située au-dessus d'une trémie de stockage (60), cette gaine pouvant également comporter des trappes d'évacuation d'air (67a).

11. Installation selon l'une quelconque des revendications 1 à 10, caractérisée en ce que des appareils de mesure du débit (3, 7, 10) des trois dispositifs de distribution (1, 5, 8) du composant calcaire ou dolomitique, de la chaux et des boues et des poussières et un appareil de mesure du taux d'humidité du mélange ou de ses composants à sécher délivrent les signaux mesurés à un automate qui commande les moyens de dosage de ces trois dispositifs.

12. Appareil selon la revendication 11, caractérisé en ce que des détecteurs de colmatage (61) sont disposés aux endroits où les matériaux chutent et qui sont situés en aval des zones de colmatage, chaque détecteur comprenant un tourniquet (62) à axe sensiblement horizontal dont une partie des pales (63) s'étend en travers de la chute (64) et dont l'interruption de rotation déclenche l'arrêt de l'installation et éventuellement une alarme.

FIG.1

EP 0 430 751 A1

FIG. 2

## FIG.3

## FIG.4

## FIG.5

EP 0 430 751 A1

**Office européen
des brevets**

**RAPPORT DE RECHERCHE
EUROPEENNE**

Numéro de la demande

**EP 90 40 3241**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | FR-A-2 620 206　(SEVIGNE ET AL)<br>\* le document en entier \*<br>— — — | 1,4 | F 26 B<br>7/00<br>C 05 D 3/02 |
| A | FR-A-7 735 89　(IMHAUSEN ET AL)<br>— — — — — | | |

| | DOMAINES TECHNIQUES RECHERCHES (Int. Cl.5) |
|---|---|
| | F 26 B<br>C 05 D |

Le présent rapport de recherche a été établi pour toutes les revendications

| Lieu de la recherche | Date d'achèvement de la recherche | Examinateur |
|---|---|---|
| La Haye | 14 février 91 | SILVIS H. |